(19)

**Europäisches Patentamt**

**European Patent Office**

**Office européen des brevets**

(11) **EP 2 202 718 A1**

(12) **EUROPEAN PATENT APPLICATION**
published in accordance with Art. 153(4) EPC

(43) Date of publication:
**30.06.2010 Bulletin 2010/26**

(21) Application number: **08842621.8**

(22) Date of filing: **26.09.2008**

(51) Int Cl.:
*G09G 3/36* (2006.01)    *G02F 1/133* (2006.01)
*G09G 3/20* (2006.01)    *G09G 3/34* (2006.01)
*F21Y 101/02* (2006.01)

(86) International application number:
**PCT/JP2008/067382**

(87) International publication number:
**WO 2009/054223 (30.04.2009 Gazette 2009/18)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.10.2007 JP 2007277708**

(71) Applicant: **Sharp Kabushiki Kaisha**
**Osaka-shi, Osaka 545-8522 (JP)**

(72) Inventor: **The designation of the inventor has not yet been filed**

(74) Representative: **Goddar, Heinz J.**
**Forrester & Boehmert**
**Pettenkoferstrasse 20-22**
**80336 München (DE)**

(54) **IMAGE DISPLAY DEVICE**

(57)    An area active drive processing unit (15) obtains, based on an input image (31), liquid crystal data (32) which is used to drive a liquid crystal panel (11) and LED data (33) which is used to drive a backlight (13). When obtaining the LED data (33), the input image (31) is divided into a plurality of areas, a maximum value Ma and a mean value Me of luminances of pixels in each area are determined, and weighted averaging of the maximum value Ma and the mean value Me is performed, whereby luminances of LEDs (23) to (25) provided in the area are determined. A coefficient $\alpha$ which is used for weighted averaging changes according to the mean value Me. An LED luminance acceleratingly rises from the mean value Me and approaches the maximum value Ma as the mean value Me increases. Accordingly, flicker and a reduction in luminance occurring in an image display device that performs backlight dimming are prevented.

*Fig. 3*

**Description**

TECHNICAL FIELD

The present invention relates to an image display device and more particularly to an image display device having a function of controlling a luminance of a backlight (backlight dimming function).

BACKGROUND ART

In image display devices having a backlight such as liquid crystal display devices, by controlling a luminance of the backlight based on an input image, power consumption of the backlight can be suppressed and image quality of a displayed image can be improved. Particularly, by dividing a screen into a plurality of areas and controlling, based on an input image in an area, luminances of backlight light sources provided in the area, a further reduction in power consumption and a further improvement in image quality are enabled. Hereinafter, a method to drive a display panel while the luminances of backlight light sources are thus controlled based on an input image in an area is referred to as "area active drive".

Image display devices that perform area active drive use, for example, LEDs (Light Emitting Diodes) of three RGB colors or white LEDs, as backlight light sources. For a method to determine luminances of these LEDs, the following two methods are conventionally known. A first method is a method (hereinafter, referred to as a Max scheme) to determine luminances of LEDs provided in an area, based on a maximum value of the luminances of pixels in the area. A second method is a method (hereinafter, referred to as a Mean scheme) to determine luminances of LEDs provided in an area, based on a mean value of the luminances of pixels in the area.

Generally, the number of LEDs included in a backlight is less than the number of pixels of a display panel. Hence, when a moving image is displayed by area active drive, a maximum value (or a mean value) of the luminances of pixels in an area changes every frame and thus the luminances of LEDs change every frame and accordingly flicker (flickering) may occur on a screen. The flicker is more noticeable when the screen is dark than when the screen is bright. In image display devices that perform area active drive, it is a key problem to prevent flicker in moving image display.

Note that in relation to the invention of this case the following prior art documents are known. Patent Document 1 describes that a backlight is configured by arranging cold cathode fluorescent lamps and light-emitting diodes in an adjacent manner and a cold cathode fluorescent lamp and a light-emitting diode are combined and driven according to a luminance of a screen. Patent Document 2 describes that a lightness distribution of illumination light from illumination means made of a plurality of light sources is calculated and image data is corrected based on the calculated lightness distribution. Patent Document 3 describes that, in an image display device that dynamically and variably controls the light emission luminances of backlight light sources, a luminance level of an on-screen display image signal is variably controlled according to the light emission luminances of the backlight light sources.

[Patent Document 1] Japanese Patent Application Laid-Open No. 2003-140110
[Patent Document 2] Japanese Patent Application Laid-Open No. 2005-309338
[Patent Document 3] Japanese Patent Application Laid-Open No. 2005-321423

DISCLOSURE OF THE INVENTION

PROBLEMS TO BE SOLVED BY THE INVENTION

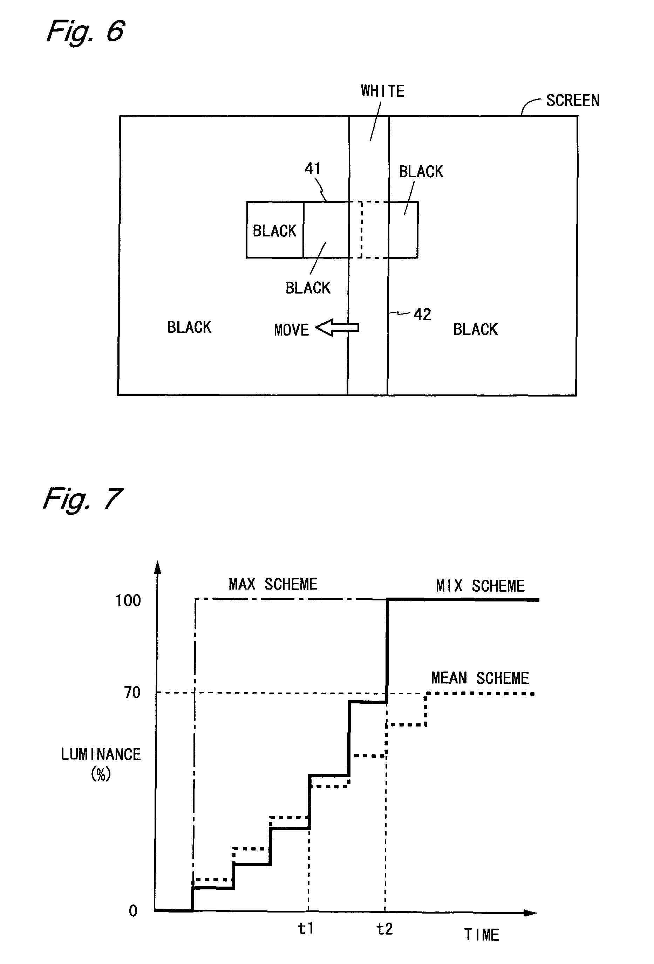

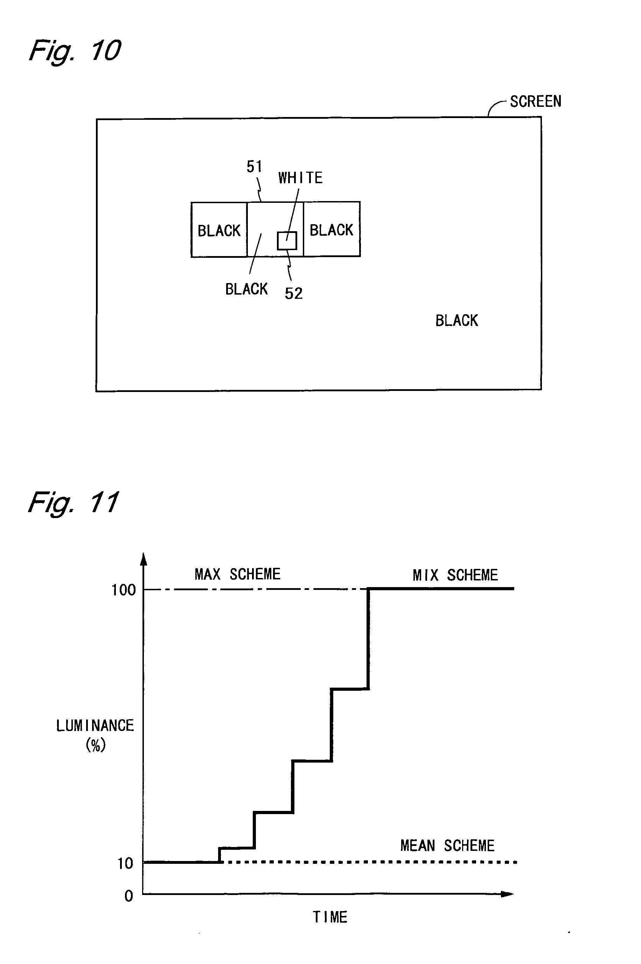

However, the above-described Max scheme and Mean scheme each have a problem (see description about Figs. 6 and 10 which will be described later). The Max scheme has an advantage in that an image can be displayed at a proper luminance but has a problem that flicker in moving image display is large and due to the large flicker an area size cannot be increased. On the other hand, the Mean scheme has an advantage in that flicker is small and thus an image quality improvement effect is higher than in the Max scheme but has a problem that a reduction in luminance occurs and thus an image cannot be displayed at a proper luminance. Generally, it can be said that the Max scheme is weak in moving image display and the Mean scheme is weak in still image display.

An object of the present invention is therefore to provide an image display device that performs area active drive, which can prevent both flicker in moving image display and a reduction in luminance in still image display.

MEANS FOR SOLVING THE PROBLEMS

A first aspect of the present invention provides an image display device having a function of controlling a luminance of a backlight, the image display device including: a display panel including a plurality of display elements; a backlight including a plurality of light sources; a signal processing unit for obtaining display data and backlight control data based on an input image; a panel drive circuit for outputting a signal for controlling light transmittances of the display elements, to the display panel based on the display data; and a backlight drive circuit for outputting a signal for controlling luminances of the light sources, to the backlight based on the backlight control data, wherein when obtaining the backlight control data, the signal processing unit divides the input image into a plurality of areas, determines a maximum value and a mean value of luminances of pixels in each of the areas, and determines luminances of light sources provided in each of the areas based on the determined maximum value and mean value.

A second aspect of the present invention provides the image display device in the first aspect of the present invention, wherein the signal processing unit determines the luminances of the light sources by performing weighted averaging of the maximum value and the mean value.

A third aspect of the present invention provides the image display device in the second aspect of the present invention, wherein the signal processing unit performs weighted averaging of the maximum value and the mean value, assigning a weight that changes according to the mean value.

A fourth aspect of the present invention provides the image display device in the third aspect of the present invention, wherein the signal processing unit performs weighted averaging of the maximum value and the mean value in such a manner that higher the mean value, higher a weight assigned to the maximum value and lower a weight assigned to the mean value.

A fifth aspect of the present invention provides the image display device in the third aspect of the present invention, wherein the signal processing unit performs weighted averaging of the maximum value and the mean value in such a manner that higher the mean value, more greatly the weight changes.

A sixth aspect of the present invention provides the image display device in the second aspect of the present invention, wherein when the signal processing unit judges that a change in the luminances of pixels in each of the areas is small, the signal processing unit performs weighted averaging of the maximum value and the mean value in such a manner that a weight higher than previous is assigned to the maximum value and a weight lower than previous is assigned to the mean value.

A seventh aspect of the present invention provides the image display device in the first aspect of the present invention, wherein when the input image is a still image, the signal processing unit determines the luminances of the light sources based on the maximum value.

An eighth aspect of the present invention provides an image display method for an image display device having a display panel including a plurality of display elements and a backlight including a plurality of light sources, the image display method including the steps of: obtaining display data and backlight control data based on an input image; outputting a signal for controlling light transmittances of the display elements, to the display panel based on the display data; and outputting a signal for controlling luminances of the light sources, to the backlight based on the backlight control data, wherein in the steps of obtaining the display data and the backlight control data, when obtaining backlight control data, the input image is divided into a plurality of areas, a maximum value and a mean value of luminances of pixels in each of the areas are determined, and luminances of light sources provided in each of the areas are determined based on the determined maximum value and mean value.

EFFECTS OF THE INVENTION

According to the first or eighth aspect of the present invention, by determining luminances of light sources based on both a maximum value and a mean value of the luminances of pixels, flicker in moving image display can be suppressed more over a scheme using only the maximum value and a reduction in luminance in still image display can be suppressed more over a scheme using only the mean value. Accordingly, both flicker in moving image display and a reduction in luminance in still image display can be prevented.

According to the second aspect of the present invention, by performing weighted averaging of a maximum value and a mean value of the luminances of pixels, luminances of light sources based on both the maximum value and the mean value can be easily determined and both flicker in moving image display and a reduction in luminance in still image display can be prevented.

According to the third aspect of the present invention, by changing a weight that is used when weighted averaging is performed, according to a mean value of the luminances of pixels, the luminances of light sources are brought close to a maximum value or the mean value of the luminances of the pixels, according to an input image, enabling to prevent both flicker in moving image display and a reduction in luminance in still image display.

According to the fourth aspect of the present invention, when a mean value of the luminances of pixels is high, the luminances of light sources are brought close to a maximum value of the luminances of the pixels, whereby flicker which is noticeable when an input image is dark can be prevented and a reduction in luminance which is problematic when an input image is bright can be prevented.

According to the fifth aspect of the present invention, the higher the mean value of the luminances of pixels, the more greatly a weight that is used when weighted averaging is performed changes. Hence, as the mean value increases, the luminances of light sources acceleratingly increase and thus rapidly approach a maximum value of the luminances of the pixels. Accordingly, a reduction in luminance which is problematic when an input image is bright can be more effectively prevented.

According to the sixth aspect of the present invention, even when luminances do not change or when an amount of change in luminances is small, the luminances of light sources gradually increase and reach a maximum value of the luminances of pixels in the end. Accordingly, a reduction in luminance in still image display can be completely prevented.

According to the seventh aspect of the present invention, when an input image is a still image, luminances of light sources are determined based on a maximum value of pixels, whereby a reduction in luminance in still image display can be immediately and completely prevented.

BRIEF DESCRIPTION OF THE DRAWINGS

Fig. 1 is a block diagram showing a configuration of a liquid crystal display device according to a first and a second embodiment of the present invention.

Fig. 2 is a diagram showing a detail of a backlight shown in Fig. 1.

Fig. 3 is a flowchart showing a process of an area active drive processing unit of a liquid crystal display device according to the first embodiment of the present invention.

Fig. 4 is a diagram showing an example of a correspondence relationship between a mean value of luminances of pixels in an area and a coefficient $\alpha$ in the liquid crystal display device according to the first embodiment of the present invention.

Fig. 5 is a diagram showing a process of obtaining liquid crystal data and LED data in the liquid crystal display device according to the first embodiment of the present invention.

Fig. 6 is a diagram showing an example of a screen where flicker occurs with a conventional Max scheme.

Fig. 7 is a diagram showing, in a comparative manner, changes in luminances of LEDs when the screen shown in Fig. 6 is displayed.

Fig. 8 is a flowchart of a coefficient determination process performed by a liquid crystal display device according to the second embodiment of the present embodiment.

Fig. 9 is a diagram showing an example of a correspondence relationship between a mean value of luminances of pixels in an area and a coefficient $\alpha$ in the liquid crystal display device according to the second embodiment of the present invention.

Fig. 10 is a diagram showing an example of a screen where a reduction in luminance occurs with a conventional Mean scheme.

Fig. 11 is a diagram showing, in a comparative manner, changes in luminances of LEDs when the screen shown in Fig. 10 is displayed.

DESCRIPTION OF THE REFERENCE NUMERALS

10    Liquid crystal display device

11    Liquid crystal panel

12    Panel drive circuit

13    Backlight

14    Backlight drive circuit

15    Area active drive processing unit

21    Display element

22    LED unit

23     Red LED

24     Green LED

25     Blue LED

31     Input image

32     Liquid crystal data

33     LED data

41     and 51 Area

42     Bar

52     Small region

BEST MODE FOR CARRYING OUT THE INVENTION

(First Embodiment)

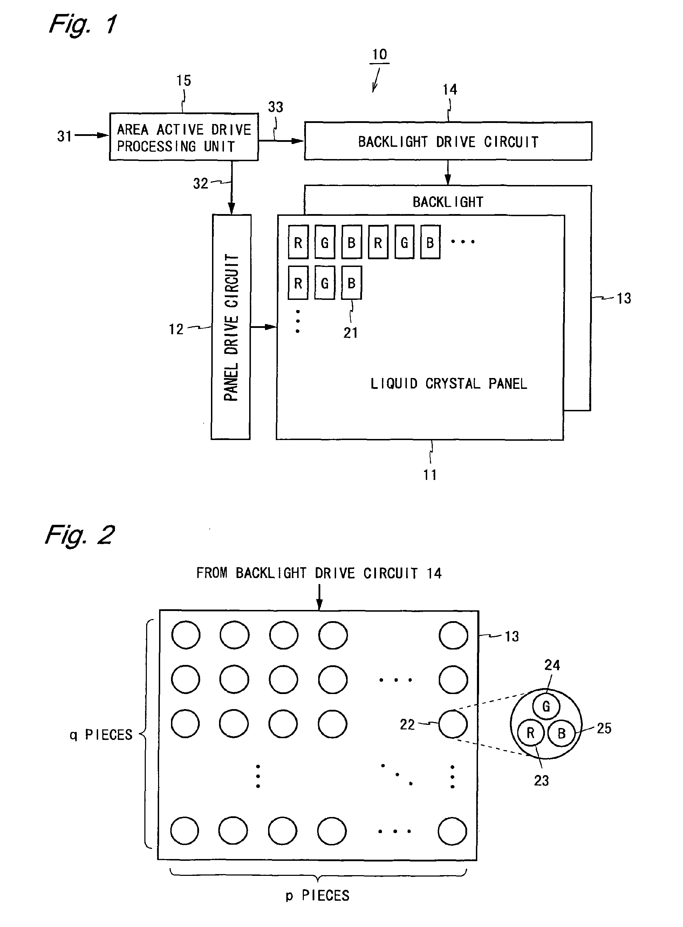

Fig. 1 is a block diagram showing a configuration of a liquid crystal display device according to a first embodiment of the present invention. A liquid crystal display device 10 shown in Fig. 1 includes a liquid crystal panel 11, a panel drive circuit 12, a backlight 13, a backlight drive circuit 14, and an area active drive processing unit 15. The liquid crystal display device 10 performs area active drive in which a screen is divided into a plurality of areas and the liquid crystal panel 11 is driven while luminances of backlight light sources are controlled based on an input image in an area. In the following, m and n are integers greater than or equal to 2 and p and q are integers greater than or equal to 1 and at least one of p and q is an integer greater than or equal to 2.

An input image 31 including an R image, a G image, and a B image is inputted to the liquid crystal display device 10. Each of the R image, the G image, and the B image includes the luminances of (m x n) pixels. The area active drive processing unit 15 obtains, based on the input image 31, display data (hereinafter, referred to as liquid crystal data 32) which is used to drive the liquid crystal panel 11 and backlight control data (hereinafter, referred to as LED data 33) which is used to drive the backlight 13 (the detail of which will be described later).

The liquid crystal panel 11 includes (m x n x 3) display elements 21. The display elements 21 are arranged two-dimensionally as a whole such that 3m display elements 21 are arranged in a row direction (a horizontal direction in Fig. 1) and n display elements 21 are arranged in a column direction (a vertical direction in Fig. 1). Each display element 21 includes an R display element that allows red light to pass therethrough, a G display element that allows green light to pass therethrough, and a B display element that allows blue light to pass therethrough. The R display element, the G display element, and the B display element are arranged side by side in the row direction and three R, G, and B display elements form one pixel.

The panel drive circuit 12 is a drive circuit for the liquid crystal panel 11. The panel drive circuit 12 outputs a signal (voltage signal) for controlling a light transmittance of a display element 21, to the liquid crystal panel 11 based on the liquid crystal data 32 outputted from the area active drive processing unit 15. The voltage outputted from the panel drive circuit 12 is written into a pixel electrode (not shown) in the display element 21 and the light transmittance of the display element 21 changes according to the voltage written into the pixel electrode.

The backlight 13 is provided on the back side of the liquid crystal panel 11 and irradiates the back of the liquid crystal panel 11 with backlight light. Fig. 2 is a diagram showing a detail of the backlight 13. As shown in Fig. 2, the backlight 13 includes (p x q) LED units 22. The LED units 22 are arranged two-dimensionally as a whole such that p LED units 22 are arranged in the row direction and q LED units 22 are arranged in the column direction. Each LED unit 22 includes one red LED 23, one green LED 24, and one blue LED 25. Lights emitted from three LEDs 23 to 25 included in one LED unit 22 hit a part of the back of the liquid crystal panel 11.

The backlight drive circuit 14 is a drive circuit for the backlight 13. The backlight drive circuit 14 outputs a signal (a voltage signal or current signal) for controlling luminances of LEDs 23 to 25, to the backlight 13 based on the LED data 33 outputted from the area active drive processing unit 15. The luminances of the LEDs 23 to 25 are controlled independently of the luminances of LEDs inside and outside the unit.

A screen of the liquid crystal display device 10 is divided into (p x q) areas and one area is associated with one LED unit 22. The area active drive processing unit 15 determines, for each of the (p x q) areas, based on an R image in the area, a luminance of a red LED 23 provided in the area. Likewise, a luminance of a green LED 24 is determined based on a G image in the area and a luminance of a blue LED 25 is determined based on a B image in the area. The area active drive processing unit 15 determines luminances of all the LEDs 23 to 25 included in the backlight 13 and outputs LED data 33 representing the determined LED luminances, to the backlight drive circuit 14.

In addition, the area active drive processing unit 15 determines luminances of backlight lights at all the display elements 21 included in the liquid crystal panel 11, based on the LED data 33. Furthermore, the area active drive processing unit 15 determines light transmittances of all the display elements 21 included in the liquid crystal panel 11 based on the input image 31 and the luminances of the backlight lights, and outputs liquid crystal data 32 representing the determined light transmittances to the panel drive circuit 12.

In the liquid crystal display device 10, the luminance of an R display element is the product of the luminance of red light emitted from the backlight 13 and the light transmittance of the R display element. Light emitted from one red LED 23 hits a plurality of areas with a corresponding one area being the center. Therefore, the luminance of an R display element is the product of the sum of the luminances of lights emitted from a plurality of red LEDs 23 and the light transmittance of the R display element. Likewise, the luminance of a G display element is the product of the sum of the luminances of lights emitted from a plurality of green LEDs 24 and the light transmittance of the G display element, and the luminance of a B display element is the product of the sum of the luminances of lights emitted from a plurality of blue LEDs 25 and the light transmittance of the B display element.

According to the liquid crystal display device 10 configured in the above-described manner, by obtaining suitable liquid crystal data 32 and LED data 33 based on an input image 31, controlling the light transmittances of the display elements 21 based on the liquid crystal data 32, and controlling the luminances of the LEDs 23 to 25 based on the LED data 33, the input image 31 can be displayed on the liquid crystal panel 11. When the luminances of pixels in an area are low, by reducing the luminances of LEDs 23 to 25 provided in the area, power consumption of the backlight 13 can be reduced. When the luminances of pixels in an area are low, by switching the luminances of display elements 21 provided in the area between lower levels, a resolution of an image can be increased, enabling to improve image quality of a displayed image.

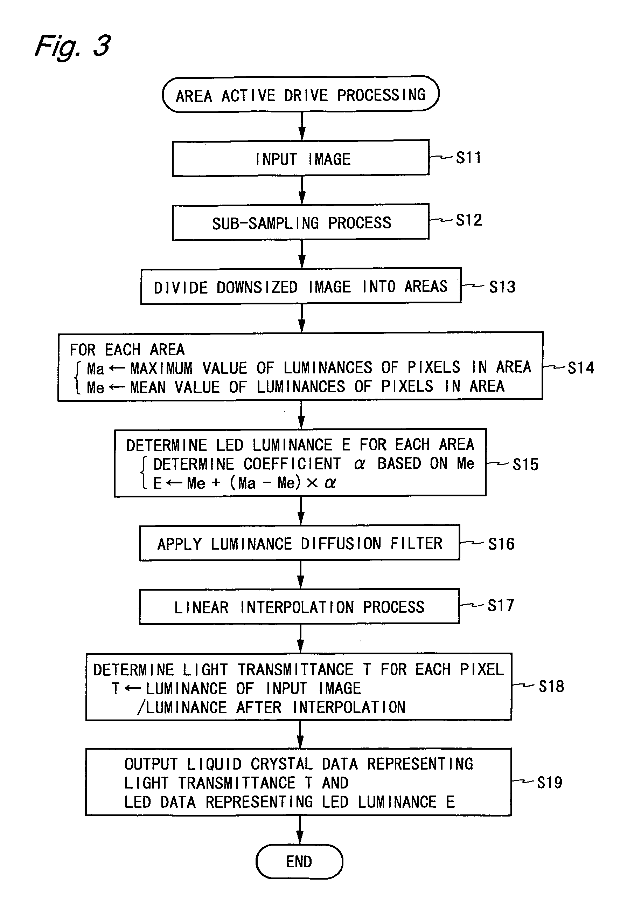

Fig. 3 is a flowchart showing a process of the area active drive processing unit 15. An image of a certain color component (hereinafter, referred to as color component C) included in an input image 31 is inputted to the area active drive processing unit 15 (step S11). The input image of the color component C includes the luminances of (m x n) pixels.

Then, the area active drive processing unit 15 performs a sub-sampling process (averaging process) on the input image of the color component C and thereby obtains a downsized image including the luminances of (sp x sq) (s is an integer greater than or equal to 2) pixels (step S12). In step S12, the input image of the color component C is downsized by a factor of (sp/m) in a horizontal direction and a factor of (sq/n) in a vertical direction. Then, the area active drive processing unit 15 divides the downsized image into (p x q) areas (step S13). Each area includes the luminances of (s x s) pixels.

Then, the area active drive processing unit 15 determines, for each of the (p x q) areas, a maximum value Ma of the luminances of pixels in the area and a mean value Me of the luminances of pixels in the area (step S14). Then, the area active drive processing unit 15 determines, for each of the (p x q) areas, an LED luminance based on the maximum value Ma and the mean value Me (step S15). In step S15, an LED luminance E is calculated by performing weighted averaging of the maximum value Ma and the mean value Me, using the following equation (1):

$$E = Me + (Ma - Me) \times \alpha$$
$$= \alpha \times Ma + (1 - \alpha) \times Me \quad \ldots (1)$$

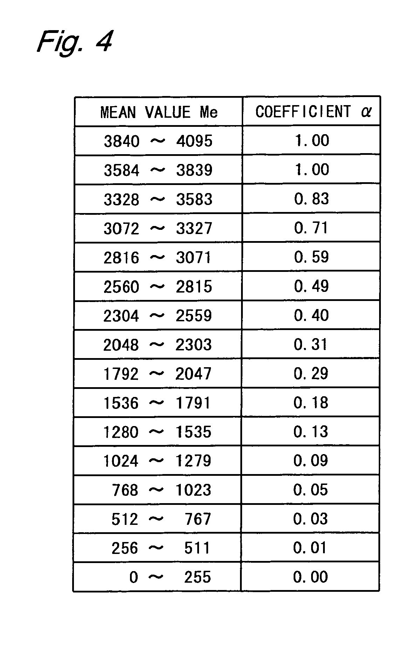

A coefficient $\alpha$ included in the above equation (1) is a weight used when weighted averaging is performed and typically takes a value between 0 and 1, inclusive. The coefficient $\alpha$ changes according to the mean value Me, and the higher the mean value Me the higher the coefficient $\alpha$. When the mean value Me is low, even if the mean value Me changes, the coefficient $\alpha$ does not change much. However, when the mean value Me is high, if the mean value Me changes, the coefficient $\alpha$ changes greatly and when a ratio of the mean value to the maximum value (Me/Ma) exceeds a predetermined value, the coefficient $\alpha$ is 1. Fig. 4 is a diagram showing an example of a correspondence relationship between the mean value Me and the coefficient $\alpha$ In Fig. 4, the mean value Me takes a value in a range of 0 to 4095 and the coefficient $\alpha$ changes in 16 steps. Note that the coefficient $\alpha$ may take a negative value.

As such, the area active drive processing unit 15 performs weighted averaging of the maximum value Ma and the mean value Me, assigning a weight that changes according to the mean value Me. At this time, the higher the mean value Me, the higher the weight assigned to the maximum value Ma and the lower the weight assigned to the mean value Me by the area active drive processing unit 15. Moreover, the higher the mean value Me, the more greatly this weight changes.

Then, the area active drive processing unit 15 applies a luminance diffusion filter (dot diffusion filter) to the (p x q) LED luminances determined in step S15 and thereby obtains first backlight luminance data including (tp x tq) (t is an integer greater than or equal to 2) luminances (step S16). In step S16, the (p x q) LED luminances are upsized by a factor of t in both the horizontal direction and the vertical direction.

Then, the area active drive processing unit 15 performs a linear interpolation process on the first backlight luminance data and thereby obtains second backlight luminance data including (m x n) luminances (step S17). In step S17, the first backlight luminance data is upsized by a factor of (m/tp) in the horizontal direction and a factor of (n/tq) in the horizontal direction. The second backlight luminance data represents the luminances of backlight lights of the color component C that enter (m x n) display elements 21 of the color component C when (p x q) LEDs of the color component C emit lights at the luminances determined in step S15.

Then, the area active drive processing unit 15 divides the luminances of the (m x n) pixels included in the input image of the color component C by the (m x n) luminances included in the second backlight luminance data, respectively, and thereby determines light transmittances T of the (m x n) display elements 21 of the color component C (step S18).

Finally, the area active drive processing unit 15 outputs, for the color component C, liquid crystal data 32 representing the (m x n) light transmittances which are determined in step S18 and LED data 33 representing the (p x q) LED luminances which are determined in step S15 (step S19). At this time, the liquid crystal data 32 and the LED data 33 are converted into values in a suitable range in accordance with specifications of the panel drive circuit 12 and the backlight drive circuit 14.

The area active drive processing unit 15 performs a process shown in Fig. 3 on an R image, a G image, and a B image and thereby obtains, based on an input image 31 including the luminances of (m x n x 3) pixels, liquid crystal data 32 representing (m x n x 3) transmittances and LED data 33 representing (p x q x 3) LED luminances.

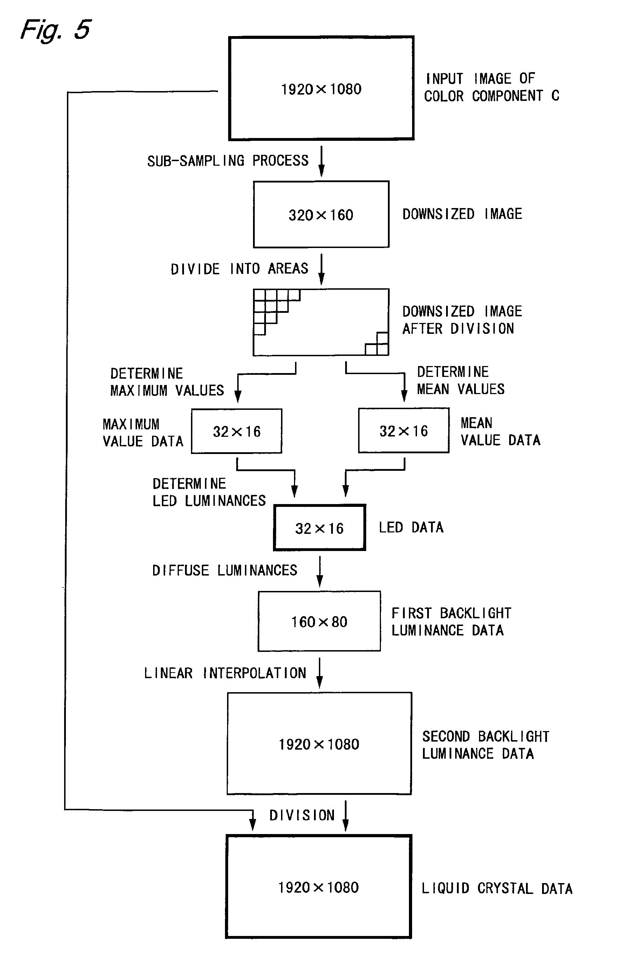

Fig. 5 is a diagram showing a process of obtaining liquid crystal data and LED data for the case in which m = 1920, n = 1080, p = 32, q = 16, s = 10 and t = 5. As shown in Fig. 5, by performing a sub-sampling process on an input image of the color component C which includes the luminances of (1920 x 1080) pixels, a downsized image including the luminances of (320 x 160) pixels is obtained. The downsized image is divided into (32 x 16) areas (the area size is (10 x 10) pixels). By determining, for each area, a maximum value Ma and a mean value Me of the luminances of pixels, maximum value data including the (32 x 16) maximum values and mean value data including the (32 x 16) mean values are obtained. By applying the above equation (1) to the maximum value data and the mean value data, LED data for the color component C which represents (32 x 16) LED luminances is obtained.

By applying a luminance diffusion filter to the LED data for the color component C, first backlight luminance data including (160 x 80) luminances is obtained. By performing a linear interpolation process on the first backlight luminance data, second backlight luminance data including (1920 x 1080) luminances is obtained. Finally, by dividing the luminances of the pixels included in the input image by the luminances included in the second backlight luminance data, liquid crystal data for the color component C which includes (1920 x 1080) light transmittances is obtained.

Note that although in Fig. 3, for simplification of description, the area active drive processing unit 15 performs a process in turn on images of the respective color components, a process on images of the respective color components may be performed in a time-division manner. Moreover, although in Fig. 3 the area active drive processing unit 15 performs a sub-sampling process on an input image to remove noise and performs area active drive based on a downsized image, the area active drive processing unit 15 may perform area active drive based on an original input image.

The effects of the liquid crystal display device 10 according to the present embodiment will be described below. For a method to determine luminances of LEDs (backlight light sources) when area active drive is performed, a method (Max scheme) to determine luminances of LEDs based on a maximum value of the luminances of pixels in an area and a method (Mean scheme) to determine luminances of LEDs based on a mean value of the luminances of pixels in an area are conventionally known. In the liquid crystal display device 10, the luminances of LEDs are calculated using the above equation (1), based on a maximum value Ma and a mean value Me of the luminances of pixels in an area. In this manner, in the liquid crystal display device 10, the luminances of LEDs are determined using a novel method (hereinafter, referred to as the Mix scheme) which is a combination of the Max scheme and the Mean scheme.

Now, the case of displaying, as shown in Fig. 6, a moving image in which a white (luminance of 100%) bar 42 having a width which is 70% of that of an area 41 moves to the left on a black (luminance of 0%) background will be considered. Note that the bar 42 moves at a speed of one pixel of a downsized image per unit of time. In this case, a maximum value Ma of the luminances of pixels in the area 41 rises from 0% to 100% immediately after a part of the bar 42 enters the area 41. A mean value Me of the luminances of pixels in the area 41 gradually rises from 0% to 70% along with the entry of the bar 42 into the area 41.

Fig. 7 is a diagram showing changes in the luminances of LEDs provided in the area 41 when a screen shown in Fig. 6 is displayed using the Max scheme, the Mean scheme, and the Mix scheme. When the screen is displayed by the Max scheme, as with the maximum value Ma, the luminances of LEDs provided in the area 41 rise from 0% to 100% immediately after a part of the bar 42 enters the area 41 (see a dash-dotted line in Fig. 7). Since the luminances of LEDs thus change abruptly in the Max scheme, large flicker occurs on the screen.

When the screen is displayed by the Mean scheme, as with the mean value Me, the luminances of LEDs provided in the area 41 gradually rise from 0% to 70% along with the entry of the bar 42 into the area 41 (see a thick dashed line in Fig. 7). Hence, in the Mean scheme, flicker is not so problematic. However, since the luminances of the LEDs only reach 70% at the maximum, a reduction in luminance occurs and thus white cannot be displayed at a proper luminance.

In the liquid crystal display device 10 according to the present embodiment, the higher the mean value Me, the higher the coefficient $\alpha$ included in the above equation (1) and the greater the amount of change in coefficient $\alpha$. Hence, when the mean value Me rises at a constant speed, the coefficient $\alpha$ acceleratingly rises from 0 and approaches 1. The LED luminance E obtained by the above equation (1) is equal to a luminance obtained by the Mean scheme when the coefficient $\alpha$ is 0 and is equal to a luminance obtained by the Max scheme when the coefficient $\alpha$ is 1. Therefore, in the liquid crystal display device 10 using the Mix scheme, the luminances of LEDs provided in the area 41 are first close to those obtained by the Mean scheme and thereafter acceleratingly rise and approach luminances obtained by the Max scheme. In the example shown in Fig. 7, the luminances of LEDs are higher than those obtained by the Mean scheme at time t1 or later and are equal to those obtained by the Max scheme at time t2 or later.

As such, in the Mix scheme, the luminances of LEDs gradually increase and thus, as with the Mean scheme, flicker is not so problematic. At time t1 or later where the luminances of LEDs are higher than those obtained by the Mean scheme, a reduction in luminance is smaller than in the Mean scheme and at time t2 or later where the luminances of LEDs reach 100%, a reduction in luminance does not occur.

Therefore, according to the liquid crystal display device 10 using the Mix scheme, by determining, based on both a maximum value Ma and a mean value Me of the luminances of pixels in an area, luminances of LEDs 23 to 25 provided in the area, flicker in moving image display can be suppressed more over the Max scheme and a reduction in luminance in still image display can be suppressed more over the Mean scheme.

In addition, the area active drive processing unit 15 determines luminances of LEDs 23 to 25 by performing weighted averaging of a maximum value Ma and a mean value Me of the luminances of pixels in an area. Accordingly, the luminances of the LEDs 23 to 25 based on both the maximum value Ma and the mean value Me can be easily determined and both flicker in moving image display and a reduction in luminance in still image display can be prevented.

Moreover, the area active drive processing unit 15 changes the coefficient $\alpha$ (a weight used when weighted averaging is performed) included in the above equation (1), according to a mean value Me of the luminances of pixels in an area. Accordingly, the luminances of LEDs 23 to 25 are brought close to a maximum value Ma or the mean value Me of the luminances of pixels in the area, according to an input image 31, enabling to prevent both flicker in moving image display and a reduction in luminance in still image display.

When a mean value Me of the luminances of pixels in an area is high, the area active drive processing unit 15 brings the luminances of LEDs 23 to 25 close to a maximum value Ma of the luminances of the pixels. Accordingly, flicker which is noticeable when an input image 31 is dark can be prevented and a reduction in luminance which is problematic when the input image 31 is bright can be prevented.

Moreover, the higher the mean value Me of the luminances of pixels in an area, the more greatly the coefficient $\alpha$ included in the above equation (1) is changed by the area active drive processing unit 15. Hence, as the mean value Me increases, the luminances of LEDs 23 to 25 acceleratingly increase and thus rapidly approach a maximum value Ma of the luminances of the pixels. Accordingly, a reduction in luminance which is problematic when an input image 31 is bright can be more effectively prevented.

As described above, according to a liquid crystal display device according to the present embodiment, by determining, based on both a maximum value and a mean value of the luminances of pixels in an area, luminances of LEDs (backlight light sources) provided in the area, both flicker in moving image display and a reduction in luminance in still image display can be prevented.

(Second Embodiment)

A liquid crystal display device according to a second embodiment of the present invention has the same configuration as the liquid crystal display device 10 according to the first embodiment (see Fig. 1). In the liquid crystal display device according to the first embodiment, in step S15 shown in Fig. 3, a coefficient $\alpha$ is determined based on a mean value Me of the luminances of pixels in an area. However, the coefficient $\alpha$ may become less than 1 and the coefficient $\alpha$ does not change while a still image is displayed. Therefore, in the liquid crystal display device according to the first embodiment, a reduction in luminance in still image display may become problematic.

In view of this, the liquid crystal display device according to the present embodiment performs a process of causing the luminances of LEDs to approach luminances obtained by the Max scheme, when a change in the luminances of pixels in an area is small. Specifically, when an area active drive processing unit 15 judges that a change in the luminances of pixels in an area is small, the area active drive processing unit 15 performs weighted averaging of a maximum value Ma and $\alpha$ mean value Me in such a manner that the coefficient $\alpha$ is made higher than previous, a higher weight than previous is assigned to the maximum value Ma, and a lower weight than previous is assigned to the mean value Me.

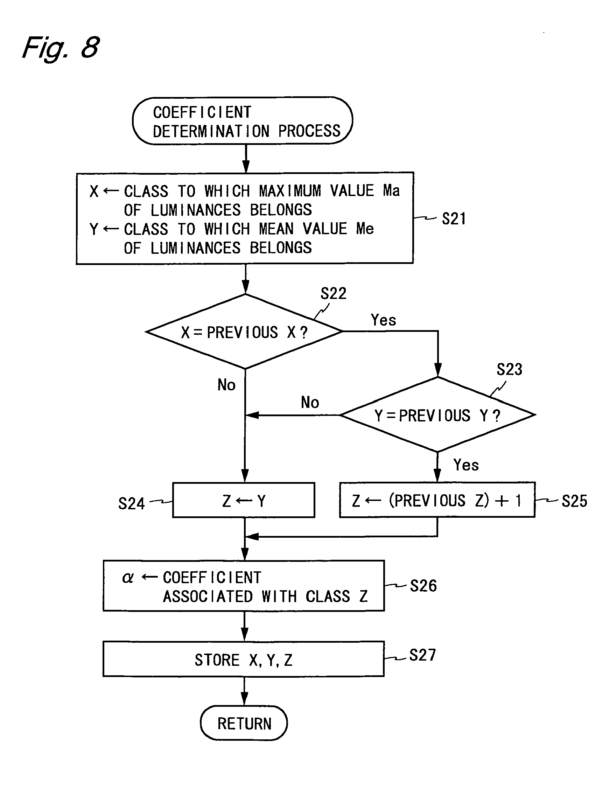

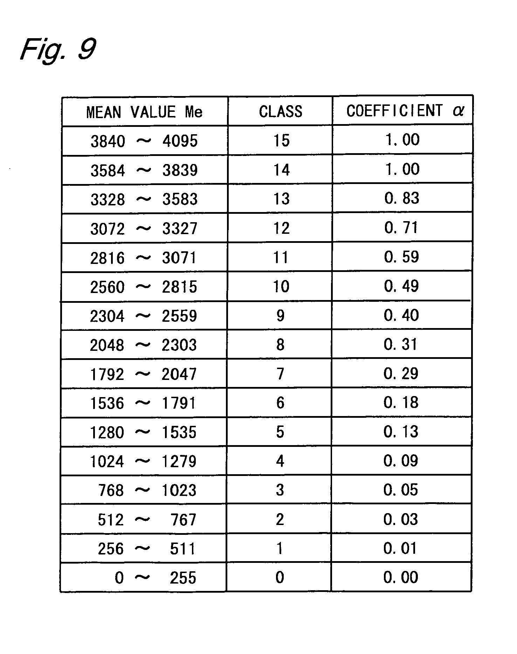

Fig. 8 is a flowchart of a coefficient determination process performed by the liquid crystal display device according to the present embodiment. The coefficient determination process shown in Fig. 8 is performed during step S15 shown in Fig. 3. Fig. 9 is a diagram showing an example of a correspondence relationship between the mean value Me and the coefficient $\alpha$ in the liquid crystal display device according to the present embodiment. In the following, a maximum value Ma and a mean value Me of the luminances of pixels in an area take values in a range of 0 to 4095.

As shown in Fig. 9, the mean value Me is classified into 16 classes. The maximum value Ma is also similarly classified into 16 classes. Hereinafter, a class to which the maximum value Ma belongs is referred to as X, a class to which the mean value Me belongs is referred to as Y, and a class associated with the coefficient $\alpha$ is referred to as Z. The area active drive processing unit 15 stores, for each color component of (p x q) areas, three classes X, Y, and Z. For example, when the number of classes is 16, the area active drive processing unit 15 stores (p x q x 3) 4-bit data units.

As shown in Fig. 8, the area active drive processing unit 15 determines, in a coefficient determination process, a class X to which a maximum value Ma determined in step S14 belongs and a class Y to which a mean value Me determined in step S14 belongs (step S21).

Then, the area active drive processing unit 15 judges whether the class X is the same as the previous class X (a class to which a maximum value of the luminances of pixels in the same area in a previous frame belongs) (step S22) and whether the class Y is the same as the previous class Y (a class to which a mean value of the luminances of pixels in the same area in the previous frame belongs) (step S23). If at least any one of them is different, then the area active drive processing unit proceeds to step S24. If both of them are the same, then the area active drive processing unit 15 proceeds to step S25.

In the former case, the area active drive processing unit 15 sets the class Y determined in step S21 to a class Z (step S24). In the latter case, the area active drive processing unit 15 adds 1 to the previous class Z (a class set in step S24 or step S25 when a coefficient determination process is performed for the same area in the previous frame) and sets the resultant to a class Z (step S25). Note that the value to be set to the class Z does not exceed a maximum value of the class (15 in this example).

Then, the area active drive processing unit 15 determines a coefficient $\alpha$ associated with the class Z set in step S24 or step S25 (step S26). Then, the area active drive processing unit 15 stores the three classes X, Y, and Z which are determined in this process, for the time when a coefficient determination process is performed for the same area in a next frame (step S27).

For example, when the maximum value Ma of the luminances of pixels in a certain area in a previous frame is 2000 and the mean value Me is 1000, the previous class X is 7 and the previous class Y is 3. It is assumed that the previous coefficient $\alpha$ is 0.05 and the previous class Z associated with the coefficient $\alpha$ is 3. When the maximum value Ma of the luminances of pixels in the same area in a next frame remains 2000 and the mean value Me changes to 1700, the class X is the same as the previous one but the class Y changes from 3 to 6. In this case, the class Z is set to 6 in step S24 and the coefficient $\alpha$ changes from 0.05 to 0.18.

On the other hand, when in the next frame the maximum value Ma changes to 2040 and the mean value Me changes to 1020, the class X and the class Y are the same as their previous ones. In this case, the class Z is set to 4 in step S25 and thus the coefficient $\alpha$ changes from 0.05 to 0.09. The same also applies when in the next frame the maximum value Ma remains 2000 and the mean value Me remains 1000.

Note that although in Fig. 8 when both a class X to which a maximum value Ma belongs and a class Y to which a mean value Me belongs are the same as their previous ones, the area active drive processing unit 15 judges that a change in the luminances of pixels in an area is small, any other method may be used to judge whether a change in the luminances of pixels in an area is small.

The effects of the liquid crystal display device according to the present embodiment will be described below. Here, the case of displaying, as shown in Fig. 10, a still image including a white small region 52 having an area which is 1/10 of an area 51, on a black background will be considered. In this case, the maximum value Ma of the luminances of pixels in the area 51 is always 100% and the mean value Me of the luminances of pixels in the area 51 is always 10%.

Fig. 11 is a diagram showing changes in the luminances of LEDs provided in the area 51 when a screen shown in Fig. 10 is displayed using the Max scheme, the Mean scheme, and the Mix scheme. When the screen is displayed by the Max scheme, as with the maximum value Ma, the luminances of LEDs provided in the area 51 are always 100% (see a dash-dotted line in Fig. 11). When the screen is displayed by the Mix scheme, as with the mean value Me, the luminances of LEDs provided in the area 51 are always 10% (see a thick dashed line in Fig. 11). Hence, although in the Max scheme white can be displayed at a proper luminance, in the Mean scheme a reduction in luminance occurs, and thus, white cannot be displayed at a proper luminance.

In the liquid crystal display device according to the present embodiment, the coefficient $\alpha$ included in the above equation (1) is determined by a coefficient determination process shown in Fig. 8. Therefore, when the screen shown in Fig. 10 is displayed, even if a maximum value Ma and a mean value Me of the luminances of pixels in an area do not change, a class Z associated with a coefficient $\alpha$ gradually increases with the passage of time and reaches 15 in the end which is the maximum value of the class. Correspondingly, the coefficient $\alpha$ acceleratingly increases and reaches 1 in the end. The luminances of LEDs provided in the area 51 acceleratingly approach luminances obtained by the Max scheme and reach luminances obtained by the Max scheme in the end.

Accordingly, in the liquid crystal display device according to the present embodiment, even when the luminances of pixels in an area do not change or when the amount of change in the luminances of pixels in an area is small, the luminances of LEDs 23 to 25 gradually increase and reach the maximum value Ma of the luminances of pixels in the area in the end. Therefore, according to the liquid crystal display device according to the present embodiment, a reduction in luminance in still image display can be completely prevented.

Note that various variants can be made for liquid crystal display devices according to the first and second embodiments of the present invention. For example, there is a case in which whether an input image 31 is a moving image or a still image is known and a signal indicating whether the input image 31 is a moving image or a still image is supplied to a liquid crystal display device. In this case, when the input image 31 is a still image, an area active drive processing unit 15 may determine luminances of LEDs 23 to 25 provided in an area, based on a maximum value Ma of the luminances of pixels in the area, with the coefficient $\alpha$ included in the above equation (1) being 1. Accordingly, a reduction in luminance in still image display can be immediately and completely prevented.

Moreover, although in the first and second embodiments a backlight 13 is configured by red LEDs 23, green LEDs 24, and blue LEDs 25, the backlight may be configured by white LEDs, cold cathode fluorescent lamps (CCFLs), and the like. When the backlight is configured by white LEDs, the area active drive processing unit may, for example, generate a Y image (luminance image) based on an R image, a G image, and a B image, perform steps S11 to S17 in the process shown in Fig. 3 on the Y image, and perform step S18 on combinations of each of the three color images and the Y image.

Although in the first and second embodiments an LED unit 22 includes one red LED 23, one green LED 24, and one blue LED 25, the number of LEDs of three colors included in the LED unit 22 may be other than that. For example, the LED unit 22 may include one red LED 23, one blue LED 25, and two green LEDs 24. In this case, a backlight drive circuit 14 may control the two green LEDs 24 such that the sum of the luminances of the two green LEDs 24 is an LED luminance obtained by the above equation (1).

A frame rate of a liquid crystal display device may be arbitrary; for example, the frame rate may be 30 Hz, 60 Hz, 120 Hz or higher. As the frame rate increases, the luminances of LEDs change in smaller units and thus flicker is less noticeable. By using the above-described Mix scheme for any image display device having a backlight, the same effects as those obtained by a liquid crystal display device can be obtained.

As described above, according to image display devices of the present invention, by determining luminances of backlight light sources provided in an area based on both a maximum value and a mean value of luminances in the area, both flicker in moving image display and a reduction in luminance in still image display can be prevented.

INDUSTRIAL APPLICABILITY

Image display devices of the present invention obtain effects of being able to prevent both flicker in moving image display and a reduction in luminance in still image display and thus can be used as various types of image display devices having a backlight, such as liquid crystal display devices.

**Claims**

1. An image display device having a function of controlling a luminance of a backlight, the image display device comprising:

   a display panel including a plurality of display elements;
   a backlight including a plurality of light sources;
   a signal processing unit for obtaining display data and backlight control data based on an input image;
   a panel drive circuit for outputting a signal for controlling light transmittances of the display elements, to the display panel based on the display data; and
   a backlight drive circuit for outputting a signal for controlling luminances of the light sources, to the backlight based on the backlight control data, wherein
   when obtaining the backlight control data, the signal processing unit divides the input image into a plurality of areas, determines a maximum value and a mean value of luminances of pixels in each of the areas, and determines luminances of light sources provided in each of the areas based on the determined maximum value and mean value.

**2.** The image display device according to claim 1, wherein the signal processing unit determines the luminances of the light sources by performing weighted averaging of the maximum value and the mean value.

**3.** The image display device according to claim 2, wherein the signal processing unit performs weighted averaging of the maximum value and the mean value, assigning a weight that changes according to the mean value.

**4.** The image display device according to claim 3, wherein the signal processing unit performs weighted averaging of the maximum value and the mean value in such a manner that higher the mean value, higher a weight assigned to the maximum value and lower a weight assigned to the mean value.

**5.** The image display device according to claim 3, wherein the signal processing unit performs weighted averaging of the maximum value and the mean value in such a manner that higher the mean value, more greatly the weight changes.

**6.** The image display device according to claim 2, wherein when the signal processing unit judges that a change in the luminances of pixels in each of the areas is small, the signal processing unit performs weighted averaging of the maximum value and the mean value in such a manner that a weight higher than previous is assigned to the maximum value and a weight lower than previous is assigned to the mean value.

**7.** The image display device according to claim 1, wherein when the input image is a still image, the signal processing unit determines the luminances of the light sources based on the maximum value.

**8.** An image display method for an image display device having a display panel including a plurality of display elements and a backlight including a plurality of light sources, the image display method comprising the steps of:

obtaining display data and backlight control data based on an input image;
outputting a signal for controlling light transmittances of the display elements, to the display panel based on the display data; and
outputting a signal for controlling luminances of the light sources, to the backlight based on the backlight control data, wherein
in the steps of obtaining the display data and the backlight control data, when obtaining the backlight data, the input image is divided into a plurality of areas, a maximum value and a mean value of luminances of pixels in each of the areas are determined, and luminances of light sources provided in each of the areas are determined based on the determined maximum value and mean value.

*Fig. 1*

*Fig. 2*

*Fig. 3*

```
        ( AREA ACTIVE DRIVE PROCESSING )
                       │
                       ▼
        ┌──────────────────────────────┐
        │         INPUT IMAGE          │──S11
        └──────────────────────────────┘
                       │
                       ▼
        ┌──────────────────────────────┐
        │      SUB-SAMPLING PROCESS     │──S12
        └──────────────────────────────┘
                       │
                       ▼
        ┌──────────────────────────────┐
        │  DIVIDE DOWNSIZED IMAGE INTO AREAS │──S13
        └──────────────────────────────┘
                       │
                       ▼
┌────────────────────────────────────────────────┐
│ FOR EACH AREA                                   │
│  ⎰ Ma ← MAXIMUM VALUE OF LUMINANCES OF PIXELS IN AREA │──S14
│  ⎱ Me ← MEAN VALUE OF LUMINANCES OF PIXELS IN AREA    │
└────────────────────────────────────────────────┘
                       │
                       ▼
┌────────────────────────────────────────────────┐
│ DETERMINE LED LUMINANCE E FOR EACH AREA         │
│  ⎰ DETERMINE COEFFICIENT α BASED ON Me          │──S15
│  ⎱ E ← Me + (Ma − Me) × α                        │
└────────────────────────────────────────────────┘
                       │
                       ▼
        ┌──────────────────────────────┐
        │  APPLY LUMINANCE DIFFUSION FILTER │──S16
        └──────────────────────────────┘
                       │
                       ▼
        ┌──────────────────────────────┐
        │   LINEAR INTERPOLATION PROCESS │──S17
        └──────────────────────────────┘
                       │
                       ▼
┌────────────────────────────────────────────────┐
│ DETERMINE LIGHT TRANSMITTANCE T FOR EACH PIXEL  │
│   T ← LUMINANCE OF INPUT IMAGE                   │──S18
│        /LUMINANCE AFTER INTERPOLATION            │
└────────────────────────────────────────────────┘
                       │
                       ▼
┌────────────────────────────────────────────────┐
│ OUTPUT LIQUID CRYSTAL DATA REPRESENTING         │
│ LIGHT TRANSMITTANCE T AND                       │──S19
│ LED DATA REPRESENTING LED LUMINANCE E           │
└────────────────────────────────────────────────┘
                       │
                       ▼
                   (  END  )
```

$Ma \leftarrow$ MAXIMUM VALUE OF LUMINANCES OF PIXELS IN AREA

$Me \leftarrow$ MEAN VALUE OF LUMINANCES OF PIXELS IN AREA

DETERMINE COEFFICIENT $\alpha$ BASED ON $Me$

$E \leftarrow Me + (Ma - Me) \times \alpha$

*Fig. 4*

| MEAN VALUE Me | COEFFICIENT $\alpha$ |
|---|---|
| 3840 ～ 4095 | 1. 00 |
| 3584 ～ 3839 | 1. 00 |
| 3328 ～ 3583 | 0. 83 |
| 3072 ～ 3327 | 0. 71 |
| 2816 ～ 3071 | 0. 59 |
| 2560 ～ 2815 | 0. 49 |
| 2304 ～ 2559 | 0. 40 |
| 2048 ～ 2303 | 0. 31 |
| 1792 ～ 2047 | 0. 29 |
| 1536 ～ 1791 | 0. 18 |
| 1280 ～ 1535 | 0. 13 |
| 1024 ～ 1279 | 0. 09 |
| 768 ～ 1023 | 0. 05 |
| 512 ～ 767 | 0. 03 |
| 256 ～ 511 | 0. 01 |
| 0 ～ 255 | 0. 00 |

*Fig. 5*

```
┌─────────────────┐
│                 │   INPUT IMAGE OF
│    1920×1080    │   COLOR COMPONENT C
│                 │
└─────────────────┘
SUB-SAMPLING PROCESS ↓
┌─────────────────┐
│    320×160      │   DOWNSIZED IMAGE
└─────────────────┘
DIVIDE INTO AREAS ↓
┌─────────────────┐
│                 │   DOWNSIZED IMAGE
│                 │   AFTER DIVISION
└─────────────────┘
```

DETERMINE                    DETERMINE
MAXIMUM VALUES               MEAN VALUES

MAXIMUM ┌────────┐      ┌────────┐ MEAN
VALUE DATA│ 32×16 │      │ 32×16 │ VALUE DATA
        └────────┘      └────────┘

DETERMINE
LED LUMINANCES
┌────────┐
│  32×16 │   LED DATA
└────────┘
DIFFUSE LUMINANCES ↓
┌─────────────────┐
│    160×80       │   FIRST BACKLIGHT
│                 │   LUMINANCE DATA
└─────────────────┘
LINEAR INTERPOLATION ↓
┌─────────────────┐
│    1920×1080    │   SECOND BACKLIGHT
│                 │   LUMINANCE DATA
└─────────────────┘
DIVISION ↓
┌─────────────────┐
│    1920×1080    │   LIQUID CRYSTAL DATA
│                 │
└─────────────────┘

*Fig. 6*

WHITE

SCREEN

41

BLACK

BLACK

BLACK

BLACK

MOVE ⇐

42

BLACK

BLACK

*Fig. 7*

MAX SCHEME     MIX SCHEME

100

MEAN SCHEME

70

LUMINANCE (%)

0

t1     t2     TIME

## Fig. 8

```
        ┌─────────────────────────┐
        │       COEFFICIENT       │
        │  DETERMINATION PROCESS  │
        └─────────────────────────┘
                     │
                     ▼
    ┌──────────────────────────────────────┐
    │ X ← CLASS TO WHICH MAXIMUM VALUE Ma   │
    │     OF LUMINANCES BELONGS             │── S21
    │ Y ← CLASS TO WHICH MEAN VALUE Me      │
    │     OF LUMINANCES BELONGS             │
    └──────────────────────────────────────┘
                     │
                     ▼           S22
              ◇─────────────────◇        Yes
              ◇  X = PREVIOUS X ? ◇──────────────┐
              ◇─────────────────◇                │
                     │                           ▼          S23
                     │ No                   ◇─────────────────◇
                     │          No          ◇  Y = PREVIOUS Y ? ◇
                     │◄─────────────────────◇─────────────────◇
                     │                           │
                     │                           │ Yes
                     ▼                           ▼
    S24 ──┌──────────────────┐    ┌──────────────────────────┐── S25
          │      Z ← Y       │    │   Z ← (PREVIOUS Z) + 1   │
          └──────────────────┘    └──────────────────────────┘
                     │                           │
                     │◄──────────────────────────┘
                     ▼
    ┌──────────────────────────────────┐
    │  α ← COEFFICIENT                  │── S26
    │      ASSOCIATED WITH CLASS Z      │
    └──────────────────────────────────┘
                     │
                     ▼
    ┌──────────────────────────────────┐
    │          STORE X, Y, Z           │── S27
    └──────────────────────────────────┘
                     │
                     ▼
              ┌─────────────┐
              │   RETURN    │
              └─────────────┘
```

*Fig. 9*

| MEAN VALUE Me | CLASS | COEFFICIENT $\alpha$ |
|---|---|---|
| 3840 ～ 4095 | 15 | 1. 00 |
| 3584 ～ 3839 | 14 | 1. 00 |
| 3328 ～ 3583 | 13 | 0. 83 |
| 3072 ～ 3327 | 12 | 0. 71 |
| 2816 ～ 3071 | 11 | 0. 59 |
| 2560 ～ 2815 | 10 | 0. 49 |
| 2304 ～ 2559 | 9 | 0. 40 |
| 2048 ～ 2303 | 8 | 0. 31 |
| 1792 ～ 2047 | 7 | 0. 29 |
| 1536 ～ 1791 | 6 | 0. 18 |
| 1280 ～ 1535 | 5 | 0. 13 |
| 1024 ～ 1279 | 4 | 0. 09 |
| 768 ～ 1023 | 3 | 0. 05 |
| 512 ～ 767 | 2 | 0. 03 |
| 256 ～ 511 | 1 | 0. 01 |
| 0 ～ 255 | 0 | 0. 00 |

*Fig. 10*

SCREEN

51

WHITE

BLACK       BLACK

BLACK   52

BLACK

*Fig. 11*

100  —— MAX SCHEME        MIX SCHEME

LUMINANCE
(%)

MEAN SCHEME

10

0

TIME

## INTERNATIONAL SEARCH REPORT

| International application No. |
|---|
| PCT/JP2008/067382 |

A. CLASSIFICATION OF SUBJECT MATTER
*G09G3/36*(2006.01)i, *G02F1/133*(2006.01)i, *G09G3/20*(2006.01)i, *G09G3/34*
(2006.01)i, *F21Y101/02*(2006.01)n

According to International Patent Classification (IPC) or to both national classification and IPC

B. FIELDS SEARCHED

Minimum documentation searched (classification system followed by classification symbols)
G09G3/36, G02F1/133, G09G3/20, G09G3/34, F21Y101/02

Documentation searched other than minimum documentation to the extent that such documents are included in the fields searched
Jitsuyo Shinan Koho        1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2006-154729 A  (L.G. Philips LCD Co., Ltd.), 15 June, 2006 (15.06.06), Par. Nos. [0039] to [0071]; Figs. 3 to 10 & US 2006/0109234 A1    & GB 2420650 A & GB 512309 D0          & KR 10-2006-0058796 A & CN 1779772 A | 1-4,8 |
| X A | JP 2007-241251 A  (Sharp Corp.), 20 September, 2007 (20.09.07), Par. Nos. [0031] to [0043] & WO 2007/091508 A1 | 1,8 2-4 |
| X A | JP 2007-249236 A  (Sharp Corp.), 27 September, 2007 (27.09.07), Par. Nos. [0048] to [0051] (Family: none) | 1,8 2-4 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 December, 2008 (17.12.08) | 06 January, 2009 (06.01.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

## INTERNATIONAL SEARCH REPORT

| | International application No. |
|---|---|
| | PCT/JP2008/067382 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

    Main invention: Claims 1-4, 8
    Second invention: Claim 5
    Third invention: Claim 6
    Fourth invention: Claim 7

    The search with consideration of claims 1-4 as the main invention has revealed
that the technical feature of claim 1 is not novel since it is disclosed
in document JP 2006-154729 A (L.G. Philips LCD Co., Ltd.), 15 June, 2006
(15.06.06), claim 1, paragraphs 0039-0066, Figs 3-10.
                        (Continued to extra sheet.)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
    1-4, 8

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.

PCT/JP2008/067382

Continuation of Box No.III of continuation of first sheet(2)

    Since the special technical features of claims 5, 6, 7 are matters stated in the respective claims, it does not appear that there is any technical relationship among these inventions involving one or more of the same or corresponding special technical features.

    Claim 8 is classified into the same group of inventions as claim 1 since it is the method invention corresponding to claim 1.

Form PCT/ISA/210 (extra sheet) (April 2007)

**EP 2 202 718 A1**

## REFERENCES CITED IN THE DESCRIPTION

**Patent documents cited in the description**

- JP 2003140110 A
- JP 2005309338 A
- JP 2005321423 A